Europäisches Patentamt

European Patent Office

Office européen des brevets

(19)

(11) Publication number: 0 041 353
A1

(12) EUROPEAN PATENT APPLICATION

(21) Application number: 81302306.6

(22) Date of filing: 26.05.81

(51) Int. Cl.³: B 62 D 25/18

(30) Priority: 02.06.80 GB 8017991

(43) Date of publication of application:
09.12.81 Bulletin 81/49

(84) Designated Contracting States:
DE FR IT SE

(71) Applicant: TALBOT MOTOR COMPANY LIMITED
Administrative Centre P.O. Box 122A Abbey Road
Whitley, Coventry, CV34GB(GB)

(72) Inventor: Wardle, Geoffrey Philip Francis
26 Limbrick Court Lawley Close
Coventry West Midlands(GB)

(72) Inventor: Long, Thomas Charles Arthur
26 Wigley Road
Leicester(GB)

(74) Representative: Bayliss, Geoffrey Cyril et al,
BOULT, WADE & TENNANT 27 Furnival Street
London EC4A 1PQ(GB)

(54) Wheel arch lining.

(57) There is disclosed a motor vehicle body (10) having front wing panels (11) formed with wheel apertures having wheel arches. In order to protect the inner side of the wheel arch and at the same time to provide a trim around the wheel aperture a plastics moulded arch liner is mounted in each wheel arch, the liner extending around the inner periphery of the wheel aperture and having an outwardly extending trim member or eyebrow (15) for encircling the wing panel (11) around the aperture. Preferably the eyebrow (15) and wheel arch liner are formed in a single moulding which may be of a hard natural or synthetic rubber, ABS or polypropylene or alternatively can be in two parts secured together.

FIG. 1.

EP 0 041 353 A1

TITLE MODIFIED
see front page

"IMPROVEMENTS IN OR RELATING TO VEHICLE BODY
PARTS AND VEHICLE BODIES INCORPORATING SUCH
PARTS"

This invention relates to vehicle body parts.

The invention provides a vehicle body part comprising a moulded plastics wheel arch liner for lining a wheel arch, characterised in that the liner is formed to line the whole of a vehicle wheel arch and in that the liner has an external wheel aperture trim member for co-operating with a separate wing member of the vehicle to define the vehicle wheel aperture.

The term "plastics" as used throughout this specification is intended to include natural and synthetic rubbers and also rubber/plastic compositions in addition to conventional plastics materials.

Preferably the wheel arch liner has an encircling channel around its outer periphery adjacent the wheel aperture trim member to receive the periphery of the vehicle wing member for attachment thereto.

In one arrangement the wheel arch liner has a lower peripheral edge for seating on an internal flange extending along the lower end of the vehicle body valance panel for attachment thereto.

In any of the above arrangements, the wheel aperture trim member may comprise an "eye-brow" shaped element to extend around the periphery of the wheel aperture.

Alternatively the wheel aperture trim member may comprise a trim panel providing a lower wing portion of the vehicle body.

Further, the trim panels for the front of the vehicle may be connected by an integral apron extending between the panels and the trim panels for the rear wings of the body part may be connected by an integral rear panel/bumper for the vehicle body.

Furthermore, sill members may be provided extending between and blending with the lower wing portions of the front and rear trim panels.

The following is a description of some specific embodiments of the invention reference being made to the accompanying drawings in which:-

Figure 1 is a diagrammatic perspective view of a
motor vehicle having wheel arch body parts in accordance
with the invention;

Figure 2 is an exploded perspective view of a front
part of the vehicle showing the body and wheel arch component
thereof in greater detail;

Figure 3 is a sectional view through the part of
the vehicle body shown in Figure 2;

Figure 4 is a perspective view of an alternative form
of wheel arch body part;

Figure 5 is a sectional view through part of a vehicle
body having a wheel arch component as shown in Figure 4
installed;  and

Figures 6 and 7 show motor vehicles incorporating
further similarly formed body parts.

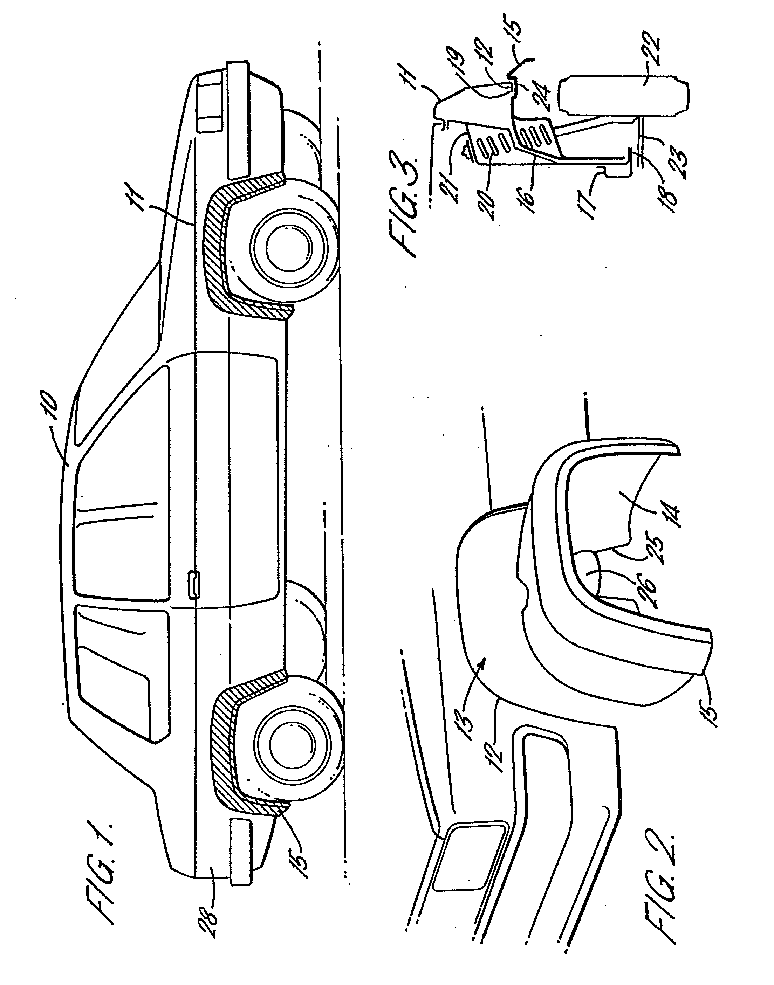

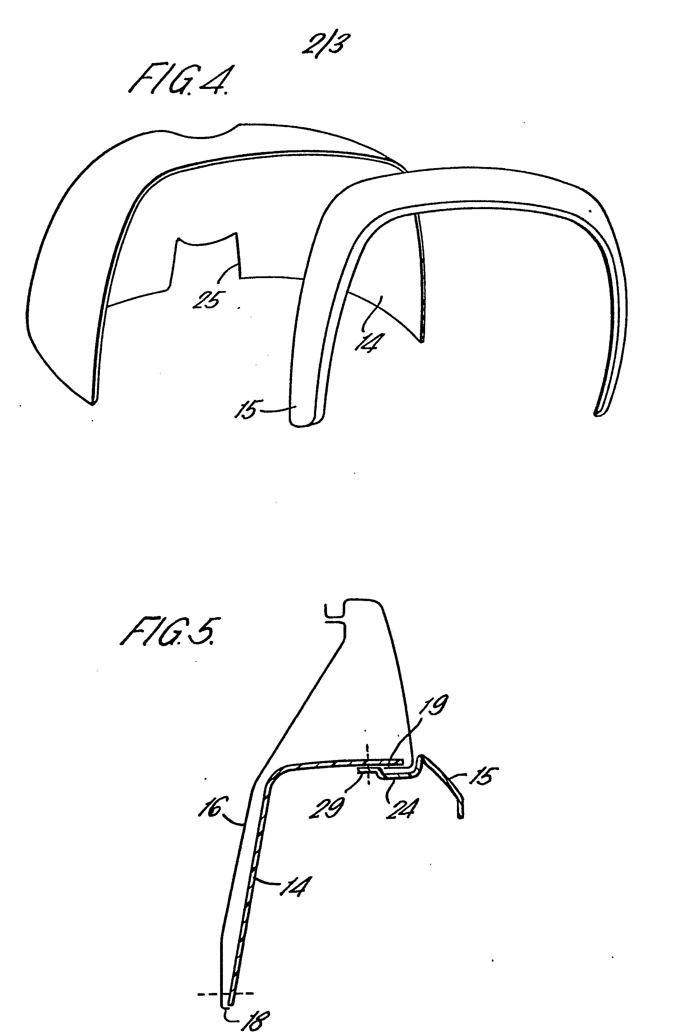

Referring firstly to Figures 1 and 2 of the drawings
there is shown a motor vehicle body 10 having front wing panels
11 formed with  wheel apertures 12 and behind which wheel
arches indicated at 13 are formed.   A one piece plastics
moulded arch liner 14 is mounted in each wheel arch, the
liner extending around the inner periphery of the wheel
aperture 12 and having an outwardly extending trim member or eyebrow 15 for encircling the wing panel 11 around the aperture 12. The eyebrow 15 and wheel arch liner 14 are formed in a single moulding. The moulding may be formed, for example, in a hard natural or synthetic rubber, A.B.S. or polypropylene.

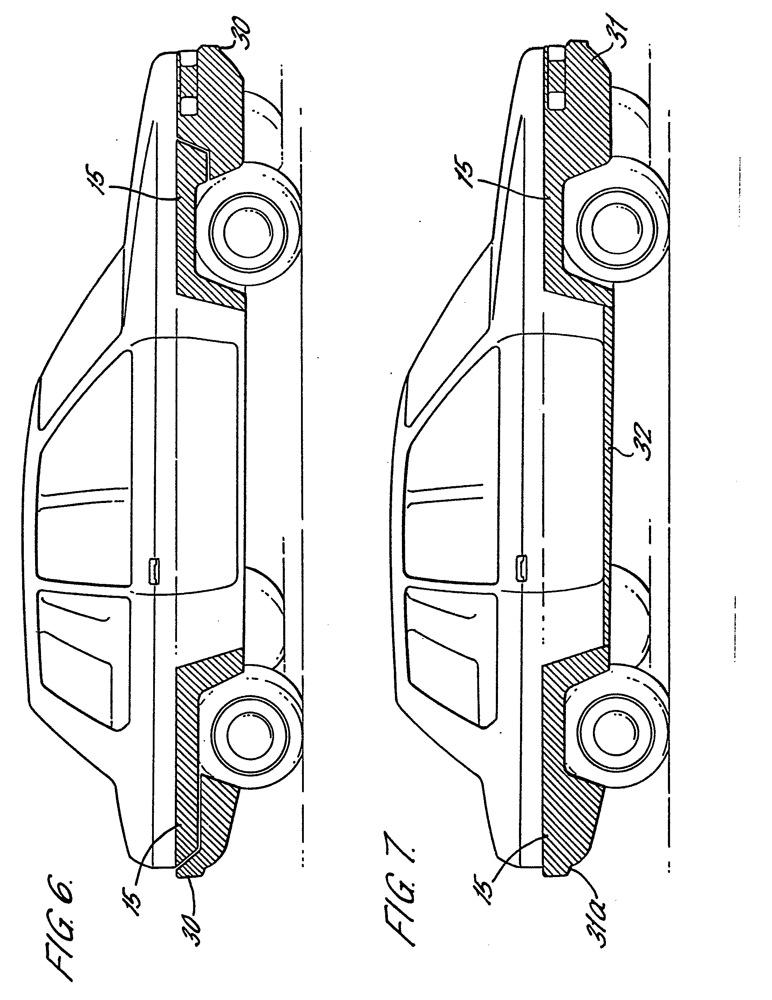

As can be seen in Figure 3 of the drawings, the wheel arch 13 is defined by the usual valance panel 16 stiffened by a box section 17 at its lower end formed with an out-turned flange 18. The wheel aperture 12 is formed with the usual inturned flange 19. A Macpherson strut suspension unit 20 is mounted at its upper end on a part 21 of the valance panel and extends downwardly into the wheel arch. The lower end of the Macpherson strut has a mounting for a front wheel 22 and is connected to the usual swing arm 23. The wheel arch liner 14 is shaped to fit inside the wheel arch snugly against the valance panel 16 with the lower edge of the wheel arch resting on the flange 18. The wheel arch is formed with a shallow channel 24 around the outer surface of the arch 14 adjacent the eyebrow 15 in which the flange 19 encircling the wheel aperture 12 engages. The lower part of the wheel arch liner 14 is cut away as indicated at 25 and is formed with a raised blister 26 above the cutaway portion to provide clearance for the Macpherson strut 20.

Alternatively the lower part of the wheel arch liner 14 is not cut away but the base of the blister 26 remains apertured to provide a suitable working clearance for the strut 20 and sealing means comprising an elastomeric gaiter may be provided between the strut and the aperture in the liner.

The wheel arch liner is attached in place to the flange 18 and the flange 19 and possibly at other locations by mechanical fixings or adhesive. In the case of mechanical fixings, it is preferred that plastic fasteners are used.

Similar wheel arch liners/eyebrow trim parts are provided for the rear wings 28 of the vehicle body, only the eyebrow part of one liner being visible in Figure 1. The arrangement is substantially similar to the front liner except for differences arising from the different locations where the liner may be attached in place and to cater for the rear suspension of the vehicle.

The wheel arch liners described and illustrated provide protection for the inner wheel arches against corrosion of the metal body or structural panels and also, by way of the eyebrow part 15, permit external changes in appearance of the vehicle body by providing different shaped eyebrows having different proportions and different styles. The eyebrows can thus be shaped to cater for different wheel and tyre sizes and shapes without the need to modify the basic vehicle body structure or body panels.

Figures 4 and 5 of the drawings illustrate a second embodiment of the invention in which the wheel arch liner 14 is formed from a relatively low grade plastics material e.g. polypropylene to which a higher grade plastics moulded eyebrow 15 formed for example, in a rubber modified polypropylene is attached to provide the required standard of finish to the externally visible surfaces. In the arrangement illustrated, the eyebrow 15 is formed with the channel 24 and an inner flange 29 and the upper periphery of the wheel arch liner 14 is overlapped with the flange 29 and part of the channel 24. The flange 19 which extends around the wheel aperture is trapped between the arch and channel 24. The flange 29 is secured to the arch 14 by any suitable fastening such as metal or plastics fastenings or adhesive. The lower peripheral edge of the arch 14 is likewise secured to the vehicle valance by a mechanical fastener or adhesive. Alternatively the liner for the wheel arch and eyebrow can be joined together before assembly on the vehicle by, for example, ultrasonic welding leaving the channel 24 sufficiently open to enable the flange 19 to be engaged in the channel as shown in Figure 5 when the assembly is mounted on the vehicle body. The lower edge of the arch 14 would then have to be sprung into place over the bottom flange 18 of the valance 16.

In all the above embodiments, suitable resilient sealing means may be provided between the eybrow and the adjacent wing panel 11 and also between the wheel arch liner 14 and valance 16 to prevent the ingress of moisture therebetween. The wheel arch liner portion may be moulded in any suitable shape to accommodate particular design features of the vehicle as for example in the case of front wheel arches, the liner may be shaped to accommodate headlamp housings, screen washer reservoirs and the like.

Figures 6 and 7 show further vehicles incorporating wheel arch liner/eyebrow trim pieces in accordance with the invention and it will be seen that these trim members 15 comprise trim panels defining a large part of the lower wing in each case. The trim panels 15 in the arrangement shown in Figure 6 are also shaped to blend with moulded front and rear bumpers 30. In the arrangement shown in Figure 7 the trim panels 15 at the front of the vehicle are integral with an apron 31 extending across the front of the vehicle and the trim panels at the rear of the vehicle are similarly connected by a rear panel/bumper 31a. Further, the trim panels 15 at the front and the rear of the vehicle are shaped to blend with a similarly styled sill 32 extending between the front and rear trim panels.

**0041353**

CLAIMS

1.     A vehicle body part comprising a moulded plastics wheel arch liner for lining a wheel arch, characterised in that the liner (14) is formed to line the whole of a vehicle wheel arch and in that the liner has an external wheel aperture trim member (15) for cooperating with a separate wing member of the vehicle to define the vehicle wheel aperture.

2.     A vehicle body part as claimed in claim 1 wherein the wheel arch liner has an encircling channel (24) around its outer periphery adjacent the wheel aperture trim member (15) to receive the periphery (12) of the vehicle wing member (11) for attachment thereto.

3.     A vehicle body part as claimed in claim 1 or claim 2 characterised in that the wheel arch liner (14) has a lower peripheral edge for seating on an internal flange (18) extending along the lower end of the vehicle body valance panel (16) for attachment thereto.

4.     A vehicle body part as claimed in claim 3 characterised in that the wheel arch liner (14) has a cut-away portion (25) through which a suspension member of the vehicle body may extend.

5.  A vehicle body part as claimed in any of the preceding claims characterised in that the wheel arch liner (14) and wheel aperture trim member (15) are formed integrally with one another.

6.  A vehicle body part as claimed in any one of claims 1 to 5 wherein the wheel arch liner (14) is formed separately from the wheel aperture trim member (15) in a different plastics grade, with a liner and trim member being secured together by mechanical fastenings, adhesive or welding.

7.  A vehicle body part as claimed in claim 6 wherein the wheel arch trim member (15) has an inwardly extending portion formed with said channel (24) to receive a flange (19) encircling the wheel aperture of the wing and the wheel arch liner is secured to the wheel arch trim member with a part of a liner overlying the channel (24) to hold the flange (19) of the vehicle wing therein.

8.  A vehicle body part as claimed in any of the preceding claims characterised in that the wheel aperture trim member (15) comprises an "eyebrow" shaped element to extend around the periphery of the wheel aperture.

9.     A vehicle body part as claimed in any of claims 1 to 7 wherein the wheel aperture trim member comprises a trim panel (15:Figures 6 & 7) providing a lower wing portion of the vehicle body.

10.     A vehicle body part as claimed in claim 9 characterised in that the trim panels (15) for the front of the vehicle are connected by an integral apron (31) extending between the panels.

11.     A vehicle body part as claimed in claim 9 or claim 10 wherein the trim panels (15) for the rear wings of the vehicle body part connected by an integral rear panel/bumper (31a) for the vehicle body.

12.     A vehicle body part as claimed in any of claims 9 to 11 wherein sill members (32) are provided extending between and blending with the lower wing portions (15) of the front and rear trim panels.

13.    a vehicle body having body parts for the front and/or rear wheel arches as claimed in any of claims 1 to 12.

FIG. 1.

10

11

28

15

FIG. 2.

13

12

15

26  25  14

FIG. 3.

11

21

19

20

12

16

15

24

17

18  23

22

1/3

0041353

2/3

FIG. 4.

0041353

FIG. 5.

FIG. 6.

FIG. 7.

3/3

0041353

European Patent
Office

**EUROPEAN SEARCH REPORT**

| Category | Citation of document with indication, where appropriate, of relevant passages | Relevant to claim |
|---|---|---|
| | GB – A – 1 291 114 (LUMLEY) <br> * page 1; fig. * | 1,2,5 |
| | DE – U – 1 944 666 (HINSCH) <br> * fig. 1 to 5 * | 1,2, 4,5 |
| | DE – U – 1 983 968 (MAN) <br> * fig. * | 6 |
| A | US – A – 2 227 425 (COBB) | 9 |
| A | US – A – 2 143 939 (GROSS) | 8 |
| A | DE – B – 2 203 721 (TRAUT) | |
| A | DE – A1 – 2 657 494 (DYNAMIT NOBEL) <br> & GB – A – 1 570 466 | |

### DOCUMENTS CONSIDERED TO BE RELEVANT

**CLASSIFICATION OF THE APPLICATION (Int. Cl.³)**

B 62 D 25/18

**TECHNICAL FIELDS SEARCHED (Int. Cl.³)**

B 62 D 25/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |
| Place of search <br> Berlin | Date of completion of the search <br> 18-08-1981 | Examiner <br> LUDWIG | |

EPO Form 1503.1 06.78